# EUROPEAN PATENT APPLICATION

(11) **EP 1 736 891 A1**
(43) Date of publication of application: **27.12.2006**
(21) Application number: 05727916.8
(22) Date of filing: 30.03.2005
(51) Int. Cl.: G06F 15/00, G06F 13/00, G06F 17/30

(54) **PORTAL SYSTEM**

(30) Priority: 30.03.2004 JP 2004098556
(71) Applicant: MATSUSHITA ELECTRIC INDUSTRIAL CO., LTD., Kadoma-shi, Osaka 571-8501 (JP)
(72) Inventor: MORI, Daisuke, Matsushita El. Ind. Co., Ltd, Osaka-shi, Osaka 540-6319 (JP); TOJO, Masaaki, Matsushita El. Ind. Co., Ltd, Osaka-shi, Osaka 540-6319 (JP)
(74) Representative: Betten & Resch
(86) International application number: PCT/JP2005/006045
(87) International publication number: WO 2005/096165

(57) **Abstract**

A system for providing, via a network, information to the users of terminals such as electronic devices, wherein a third party, who has illegally acquired the identifying information of a user, can be prevented from spoofing by use of another electronic device. A portal system comprises a portal image display apparatus having a device identifying information holding part, a portal image display information requesting signal producing part, a portal image display information requesting signal transmitting part, a portal image display information receiving part and a display part; and a portal image server apparatus having a portal image display information requesting signal receiving part, a portal image display information holding part, a first determining part and a portal image display information transmitting part.

## Description

### BACKGROUND OF THE INVENTION

### Field of the Invention

The present invention relates to a portal system comprising a portal display screen apparatus and a portal screen display server, in which a specific portal screen is selected and displayed based on identification information of apparatus of the portal screen display apparatus.

### Description of the Related Art

In the system for providing information to user terminal such as electronic apparatus etc. via a network, with an increase of contents providers and the diversification of information content, the necessity of providing information optimized according to users' needs is increasing. In this case, as the system for providing information according to users' needs with whilst reducing users' burden of manually editing a menu of a portal site, for example, the system in which the portal site is optimized based on an access log of the user to network resources, has been invented. (Japanese Patent Publication No. 2003-345827)

However, in the conventional system, once user's identification information is leaked to a third party, it is difficult to prevent the third party from masquerading using another electronic apparatus.

### SUMMARY OF THE INVENTION

In order to solve the above deficiencies, in the present invention, a portal screen optimized by a user etc. is correlated with the identification information of apparatus of an electronic apparatus used by the user. Hence, the present invention is a portal system, comprising the portal screen display apparatus; and the portal screen server apparatus, wherein said portal screen display apparatus comprises, the storage for identification information of apparatus, which stores identification information of apparatus including identification information of manufacturer, which identifies its own manufacturer, in non-rewritable state, the generator for request signal for portal screen display information, which generates a request signal for portal screen display information, which is a signal for requesting the portal screen display information to said portal screen server apparatus, the transmitter for request signal for portal screen display information, which transmits the request signal for portal screen display information, and said identification information of apparatus correlated with said request signal for portal screen display information, the receiver for portal screen display information, which receives the portal screen display information from said portal screen server apparatus, the display, which displays a portal screen based on the portal screen display information received by said receiver for portal screen display information, and said portal screen server apparatus comprises, the receiver for request signal for portal screen display information, which receives the request signal for portal screen display information, the storage for portal screen display information, which stores the portal screen display information corresponding to said identification information of apparatus, the first determination unit, which determines whether said identification information of apparatus is correlated with the request signal for portal screen display information received by said receiver for request signal for portal screen display information, and the transmitter for portal screen display information, which acquires said portal screen display information corresponding to the identification information of apparatus from said storage for portal screen display information, and transmits it to said portal screen display apparatus, if the determination result by said first determination unit indicates that said identification information of apparatus is correlated with the request signal.

According to the portal system of the present invention, it becomes possible to prevent masquerading caused by leaking of user's identification information to the third party, and to display the portal screen optimized for user etc.

### BRIEF DESCRIPTION OF THE DRAWINGS

Fig. 1 is a schematic diagram explaining the first embodiment;
Fig. 2 is a functional block diagram explaining the first embodiment;
Fig. 3 is a functional block diagram explaining the first embodiment;
Fig. 4 is a schematic diagram explaining the first embodiment;
Fig. 5 is a functional block diagram explaining the first embodiment;
Fig. 6 is a schematic diagram explaining the first embodiment;
Fig. 7 is a functional block diagram explaining the first embodiment;
Fig. 8 is a schematic diagram explaining the first embodiment;
Fig. 9 is a flow chart of the first embodiment;
Fig. 10 is a functional block diagram explaining the second embodiment;
Fig. 11 is a functional block diagram explaining the second embodiment;
Fig. 12 is a schematic diagram explaining the second embodiment;
Fig. 13 is a flow chart of the second embodiment;
Fig. 14 is a functional block diagram explaining the third embodiment;
Fig. 15 is a functional block diagram explaining the fourth embodiment;
Fig. 16 is a functional block diagram explaining the fifth embodiment;
Fig. 17 is a flow chart the fifth embodiment;
Fig. 18 is a functional block diagram of explaining the sixth embodiment;
Fig. 19 is a flow chart the sixth embodiment;
Fig. 20 is a functional block diagram of explaining the seventh embodiment;
Fig. 21 is a schematic diagram explaining the fifth embodiment;
Fig. 22 is a schematic diagram explaining the seventh embodiment.

### DETAILED DESCRIPTION OF THE PREFERRED EMBODIMENTS

The embodiments of the present invention will be described hereinbelow with reference to the drawings. The relationships between the embodiments and Claims are as follows.

The first embodiment will mainly describe Claims 1 and 10 etc.

The second embodiment will mainly describe Claim 2 etc.

The third embodiment will mainly describe Claims 3 and 11 etc.

The fourth embodiment will mainly describe Claims 4 and 12 etc.

The fifth embodiment will mainly describe Claim 5 etc.

The sixth embodiment will mainly describe Claim 6 etc.

The seventh embodiment will mainly describe Claim 7 etc.

Note that the present invention is not to be limited to the above embodiments and able to be embodied in various forms without departing from the scope thereof.

### (First embodiment)

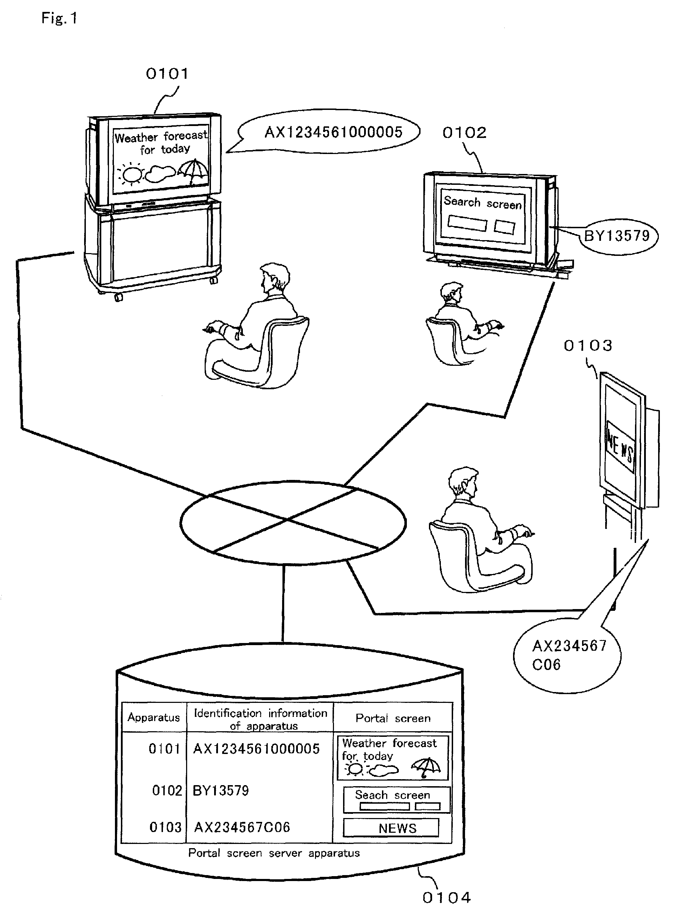

Fig. 1 is a schematic diagram explaining the first embodiment. Hereinbelow, the first embodiment will be described with reference to Fig. 1.

The portal system of the present invention comprises the portal screen display apparatus (0101 to 0103), and the portal screen server apparatus (0104). As shown in Fig. 1, multiple portal screen display apparatus are used. Although a single portal screen server apparatus is shown in Fig. 1, multiple portal screen server apparatus may be used. In Fig. 1, the portal screen display apparatus is a digital television with internet function placed in each user's home.

The present system is characterized in that the portal screen display apparatus stores the identification information of apparatus unique to respective apparatuses, and when the request signal for portal screen display is transmitted from the apparatus to portal screen server apparatus, the identification information of apparatus is correlated with the request signal for portal screen display. The identification information of apparatus is information for identifying the apparatus itself such as a production number. The information is transmitted to the portal screen display server apparatus, so that the portal screen display apparatus can identify which portal screen display apparatus transmitted the request signal for portal screen display.

For example, the portal careen display apparatus 1 (0101) stores the identification information of apparatus such as `AX1234561000005', in which `A' which is a code indicating that the apparatus was manufactured by A, 'X', which is a code indicating the type of apparatus, '123456', which is the production number or the apparatus, and `1000005', which is the postal code of the place in which the apparatus is located (Marunouchi, Chiyoda-ku, Tokyo), are combined. The portal screen display server apparatus (0104), which has received a request for weather forecast for one day in the area (Marunouchi, Chiyoda-ku, Tokyo), in which the apparatus is located, as the portal screen display information from the apparatus, after collating the request signal with a list of the identification information of the apparatus, which is stored by the apparatus, and confirming that request signal has definitely been transmitted from the apparatus, transmits the portal screen display information, which includes the weather forecast for one day in the area, to the portal screen display apparatus 1 (0101). Thus, it becomes possible for a user to see the weather forecast on the portal screen of the digital television with internet function in the user's home.

Further, for example, the portal screen display apparatus 2 (0102) stores the identification information of apparatus such as 'BY13579', in which 'B' which is a code indicating that the apparatus was manufactured by B, 'Y', which is a code indicating the type of apparatus, and '13579', which is the production number or the apparatus, are combined. The portal screen display server apparatus (0104), which has received a request for an information search screen in the internet as the portal screen display information from the apparatus, after collating the request signal with a list of the identification information of the apparatus, which is stored by the apparatus, and confirming that request signal has definitely been transmitted from the apparatus, transmits the portal screen display information, which includes the information search screen, to the portal screen display apparatus 2 (0102). Thus, it becomes possible for a user to search using the information search screen on the portal screen of the digital television with internet function in the user's home.

Furthermore, for example, the portal screen display apparatus 3 (0103) stores the identification information of apparatus such as 'AX234567C06', in which 'A' which is the code indicating that the apparatus was manufactured by A, 'X', which is a code indicating the type of apparatus, '234567', which is the production number or the apparatus, and 'C', which is the code indicating a local station in Osaka of C broadcasting station, the CATV station, to which the user of the apparatus subscribes, are combined. The portal screen display server apparatus (0104), which has received a request for a news program as the portal screen display information from the apparatus, after collating the request signal with a list of the identification information of apparatus, which is stored by the apparatus, and confirming that request signal has definitely been transmitted from the apparatus, transmits the portal screen display information, which includes the news program for Osaka area provided by C broadcasting station, to the portal screen display apparatus 3 (0103). Thus, it becomes possible for a user to watch the news program on the portal screen of the digital television with internet function in the user's home.

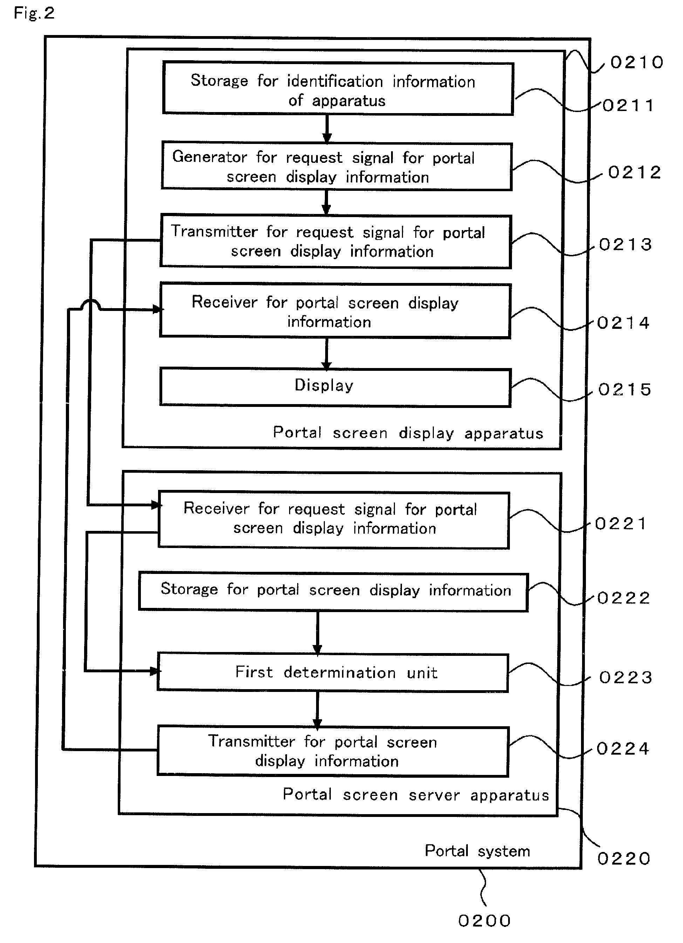

Fig. 2 is a functional block diagram explaining the first embodiment.

The respective units, the constituents of the present invention, consisting of any one of hardware, software, or both hardware and software. For example, in cases where a computer is used, hardware consisting of CPU, memory, bus, interface, peripheral devices etc., and software, operatable on the hardware, are used for implementing them.

Specifically, by sequentially carrying out programs on the memory, the data on the memory, or the data inputted via the interface is processed, stored, and outputted, so that the functions of respective units are implemented.

The 'portal system' (0200) of the first embodiment comprises the 'portal screen display apparatus' (0210), and the 'portal screen server apparatus' (0220).

The 'portal screen display apparatus' (0210) comprises the 'storage for identification information of apparatus' (0211), the 'generator for request signal for portal screen display information' (0212), the 'transmitter for request signal for portal screen display information' (0213), the 'receiver for portal screen display information' (0214), and the 'display' (0215).

The 'portal screen' is, generally speaking, an initial screen displayed upon switching on the portal screen display apparatus, but is not limited to this. For example, in an apparatus having both functions of broadcasting receiving function and internet connecting function, if the initial screen is the broadcasting receiving screen, the screen initially displayed upon changing to the internet connecting function may be the initial screen as well.

The portal screen makes a strong impression of a screen displayed on an electronic apparatus to a user. For example, the manufacturer of the apparatus can increase the manufacturer's name awareness to user by displaying the manufacturer's name on the portal screen, thereby improving the manufacturer's image if the apparatus is good. The reason for this is that the user always sees the portal screen at the outset of using the electronic apparatus, and therefore, the portal screen has a different value from the other screen displayable on the electronic apparatus.

The 'portal screen display apparatus' (0210) is a apparatus such as a personal computer, a mobile phone, a television, and the other home appliances, for displaying a screen provided from the portal screen server apparatus so that a user can see it.

The 'storage for identification information of apparatus' (0211) stores identification information of apparatus including identification information of manufacturer, which identifies its own manufacturer, in a non-rewritable state. The 'identification information of manufacturer' is information for uniquely identifying a manufacturer. In this case, the manufacturer may include a manufacturer of an entire apparatus, or a manufacturer of a component of the apparatus, for example, only a component constituting information-communication function. Further, examples of the identification information of manufacturer include the production number of the apparatus, model code of the apparatus, or original ID assigned for identifying the apparatus.

In addition, the identification information of manufacturer is stored in a non-rewritable state. Specifically, this information is information stored in a ROM, so that user etc. of an electronic apparatus cannot rewrite the content of this information. Therefore, the term 'non-rewritable' means that once the identification information of manufacturer is generated and stored, essentially, nobody can change the information content. The reason for this is to secure the function of preventing masquerading by a third party, by correlating the information indicating which user send the portal screen display information with the identification information of manufacturer. However, without contradicting the above purpose, rewriting may be allowed in certain cases. Examples of the certain cases include, the case where it becomes necessary to renew the identification information of manufacturer because of division of the manufacturer of the apparatus, the case where it becomes necessary to renew the model code of the apparatus in order to indicate that the apparatus has the additional function if a part of the function has been added to the apparatus, and the case where it becomes necessary to repair the apparatus. In such cases, the rewriting is carried out on the basis of the information etc., which is known only by the manufacturer of the apparatus, in order to prevent masquerading by a third party caused by leak of the identification information of apparatus.

The 'generator for request signal for portal screen display information' (0212) generates a request signal for portal screen display information, which is a signal for requesting the portal screen display information to said portal screen server apparatus.

The 'request signal for portal screen display information' is a signal, which indicates information as to which screen is desired to be displayed, and requests for the display of the screen.

The 'transmitter for request signal for portal screen display information' (0213) transmits the request signal for portal screen display information, and said identification information of apparatus correlated with said request signal for portal screen display information. In this case, URL, which is the destination of a reply of the portal screen display information from the portal screen display server apparatus, may be transmitted at that point. Further, the transmission may be carried out via any of telephone line, internet connection, or a combination thereof.

The 'receiver for portal screen display information' (0214) receives the portal screen display information from said portal screen server apparatus. The reception may be carried out via any of telephone line, internet connection, or a combination thereof. Further the 'portal screen display information' is information transmitted from the portal screen display apparatus as the information displayed on the portal screen. Here, there are two cases: the case where all information to be displayed are transmitted from the portal server, and the case where the information to be displayed is preliminarily stored in the portal screen display apparatus, and the portal screen display apparatus displays the required information based on the instruction transmitted from the portal screen server apparatus.

The 'display' (0215) displays a portal screen based on the portal screen display information received by said receiver for portal screen display information. The display of the portal screen may occupy the entire displayable portion of the apparatus, or a portion thereof. In the latter case, for example, the display of the portal screen and the reception screen of television broadcasting occupy half of the displayable portion, respectively.

In addition, the 'portal screen server apparatus' comprises the 'receiver for request signal for portal screen display information' (0221), the 'storage for portal screen display information' (0222), the 'first determination unit' (0223), and the 'transmitter for portal screen display information' (0224). This apparatus may be single, or may be multiple.

The 'receiver for request signal for portal screen display information' (0221) receives the request signal for portal screen display information. The reception may be carried out via any of telephone line, internet connection, or a combination thereof.

The 'storage for portal screen display information' (0222) stores the portal screen display information corresponding to said identification information of apparatus. In this case, the term 'correspondence' may be a one-on-one correspondence between the entire identification information of apparatus and the portal screen display information, or a one-on-one correspondence between one portion of the identification information of apparatus and the portal screen display information. The latter is, for example, a one-on-one correspondence between the initial three digits of the identification information of apparatus and the portal screen display information. In this case, the same portal screen display information is transmitted to multiple portal screen display apparatus, which commonly share the initial three digits.

The 'first determination unit' (0223) determines whether said identification information of apparatus is correlated with the request signal for portal screen display information received by said receiver for request signal for portal screen display information. The case where the identification information of apparatus is not correlated with the request signal for portal screen display information includes the case where the request signal is incorrect, but does not include the information to be essentially included in the identification information of apparatus, and the contrary case where the information other than the identification information of apparatus is included. In the latter case, a process for collating the list of the identification information of apparatus, which is preliminarily stored in the portal screen server apparatus, with the information transmitted as the identification information of apparatus is included in the determination process carried out by the first determination unit. Note that, the collating method may include the method for checking whether the information identical to the information transmitted as the identification information of apparatus is included in the list, and the method for checking whether a predetermined effect is acquired by carrying out a certain process on the information transmitted as the identification information of apparatus. For example, in the latter case, the setting, in which the final digit of the sum of the digit portion in the correct identification information of apparatus preliminarily stored is always '0', is done, and whether the information transmitted as the identification information of apparatus fulfills this condition is checked.

The 'transmitter for portal screen display information' (0224) acquires said portal screen display information corresponding to the identification information of apparatus from said storage for portal screen display information, and transmits it to said portal screen display apparatus, if the determination result by said first determination unit indicates that said identification information of apparatus is correlated with the request signal. The transmission may be carried out via any of telephone line, internet connection, or a combination thereof.

Note that it is preferable that the address of transmission destination is preliminarily stored as the address correlated with the identification information of apparatus. In this case, the 'transmitter for portal screen display information' (0224) stores the address information, which is preliminarily registered.

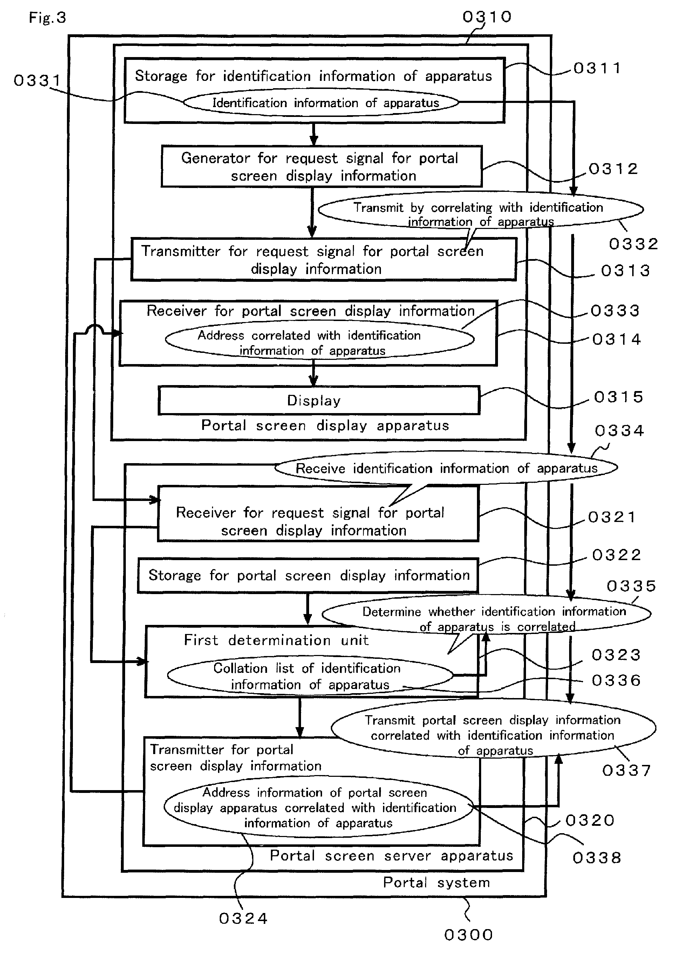

Fig. 3 is a functional block diagram explaining the function of the identification information of apparatus in the system configuration of the first embodiment.

In Fig.3, the identification information of apparatus is preliminarily stored in the 'storage for identification information of apparatus' (0311) of the 'portal screen display apparatus' (0310).

As to the identification information of apparatus, when the `transmitter for request signal for portal screen display information' (0313) of the apparatus (0310) transmits the request signal for portal screen display information, the identification information is correlated with the signal, and is transmitted (0332).

The transmitted identification information of apparatus is received (0334) by the 'receiver for request signal for portal screen display information' (0321) of the 'portal screen server apparatus' (0321).

It is determined (0335) whether the received identification information of apparatus has been correlated with the request signal for portal screen display information by the 'first determination unit' (0323) of the apparatus (0320). At that point, the determination is carried out, in the example of Fig. 3, based on the collation list of identification information of apparatus (0336), which is preliminarily stored in the unit (0323).

As a result of the determination, if it is determined that the identification information of apparatus is correlated with the request signal, the 'transmitter for portal screen display information' (0324) of the apparatus (0320) transmits (0337) the portal screen display information corresponding to the identification information of apparatus to the 'receiver for portal screen display information' of the 'portal screen display apparatus' (0310). At that point, the address of the unit (0314), which is a transmission destination, is, in the example of Fig. 3, based on the address information (0338) correlated with the preliminarily stored identification information of apparatus.

The transmitted portal screen display information is received at the address (0333) of the 'receiver for portal screen display information' (0314), and the information is displayed by the 'display' (0315) of the 'portal screen display apparatus' (0310).

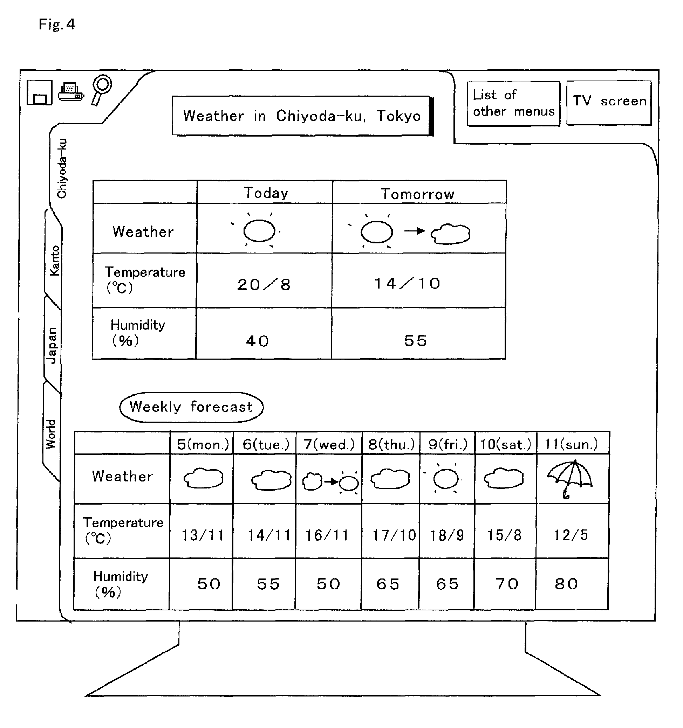

Fig. 4 is a schematic diagram exemplifying the state where the portal screen is displayed on the portal screen display apparatus.

In Fig. 4, the portal screen including 'Weather in Choyoda-ku, Tokyo' is displayed. Therefore, the information as to the weather and temperature etc. for today and tomorrow in Chiyoda-ku is displayed in the middle of the screen and the information as to the weekly weather in Chiyoda-ku is displayed in the lower portion of the screen. In addition, for example, in the same screen, it is possible to change the sheet of 'Chiyoda-ku' to the sheet displaying the weather of other area such as 'Kanto' or 'Japan'. Further, clicking on the upper-left icon, it is possible to store, print, or zoom-in on the portal screen. Furthermore, it is possible to change it to the screen such as the list of other menus or television screen other than the portal screen.

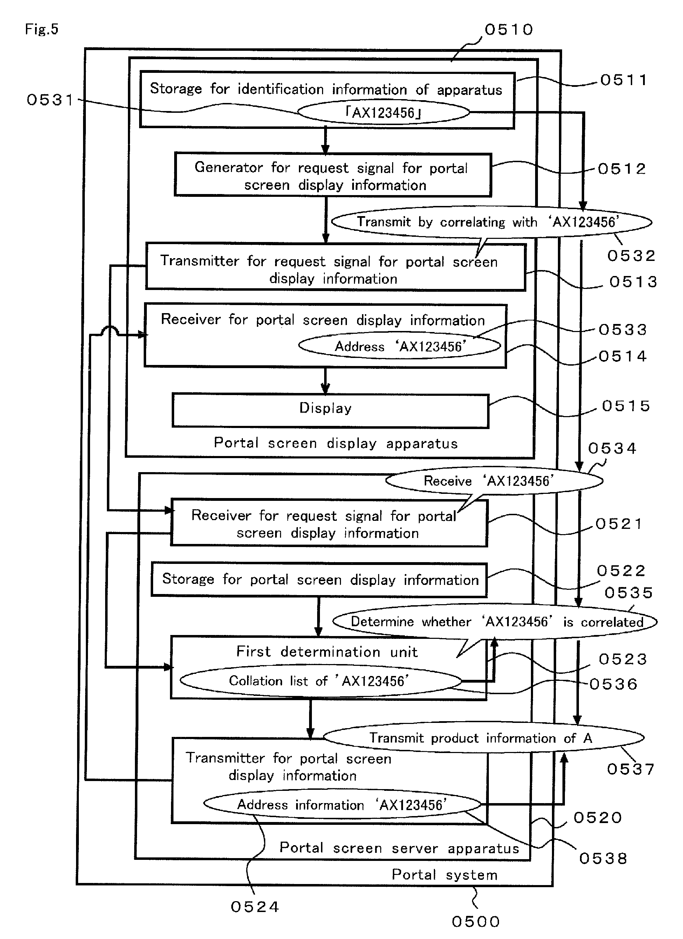

Fig. 5 is a functional block diagram explaining the function of the identification information of apparatus in the system configuration of the first embodiment according to the concrete example.

Fig. 5 shows the case of the identification information of manufacturer included in the identification information of apparatus, and in Fig. 5, A is the manufacturer.

In Fig. 5, the identification information of apparatus including the identification information of manufacturer of A is preliminarily stored in the 'storage for portal screen display information' (0511) of the 'the portal screen display apparatus' (0510). In Fig. 5, the identification information of manufacturer is indicated by 'A', and the identification information of apparatus, including 'A', is indicated by 'AX123456' (0531).

As to the identification information of apparatus, when the 'transmitter for request signal for portal screen display information' (0513) of the apparatus (0510) transmits the request signal for portal screen display information, the 'AX123456' is correlated with the signal, and is transmitted (0532), so that the identification information of apparatus 'A' of the manufacturer A is included therein and transmitted.

The transmitted identification information of apparatus 'AX123456', including 'A', is received (0534) by the 'receiver for request signal for portal screen display information' (0521) of the 'portal screen server apparatus' (0520).

It is determined (0535) whether the received identification information of apparatus has been correlated with the request signal for portal screen display information by the 'first determination unit' (0523) of the apparatus (0520). At that point, the determination is carried out, in the example of Fig. 5, based on the collation list of identification information of apparatus (0536), which is preliminarily stored in the unit (0523), by collating, for example, whether the 'AX123456' exists in the list. As a result of this determination, the apparatus (0520) can know whether the received request signal for portal screen display information has been transmitted from the portal screen display apparatus, which has been manufactured by A. Consequently, the portal screen server apparatus can display the appropriate portal screen for the apparatus manufactured by A

As a result of the determination, if it is determined that the identification information of apparatus including the identification information of manufacturer is correlated with the request signal for portal screen display information, the 'transmitter for portal screen display information' (0524) of the apparatus (0520) transmits (0537) the portal screen display information corresponding to the identification information of apparatus including the identification information of manufacturer (in Fig. 5, product information of A) to the 'receiver for portal screen display information' (0514) of the 'portal screen display apparatus' (0510).

The portal screen display information corresponding to the identification information of apparatus including the identification information of manufacturer is, for example, in cases where the portal screen display apparatus is manufactured by A, the product information of A is displayed on the portable screen. Alternatively, 'Q & A' as to an instruction manual of the product manufactured by A may be displayed. Alternatively, a button to connect to the technical center of A for request of repair or inspection etc. may be displayed. Alternatively, a button for downloading an upgraded version of the software of the product manufactured by A may be displayed. Alternatively, an icon for operating a function specific to the product manufactured by A may be displayed. For example, as the case where an operation button of an air conditioner is displayed and by pressing the button, the air conditioner can be operated, the button for communicating with the other home appliances in a home is displayed.

At that point, the address (0533) of the unit (0514), which is a transmission destination, is, in the example of Fig. 5, based on the address information (0538) correlated with the preliminarily stored identification information of apparatus. In Fig. 5, the identification information of apparatus 'AX123456' is used for the address (0533) without change.

The transmitted portal screen display information is received at the address (0533) of the `receiver for portal screen display information' (0514), and the information described in the above example, is displayed by the 'display' (0515) of the 'portal screen display apparatus' (0510).

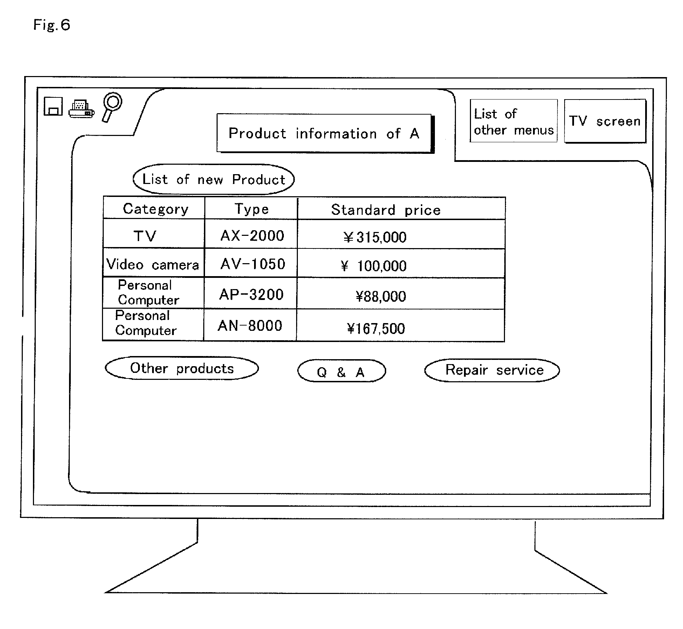

Fig. 6 is a schematic diagram showing that the portal screen is displayed on the portal screen display apparatus according to the concrete example.

In Fig. 6, the portal screen including 'Product information of A' is displayed. Therefore, the information as to the category, type, standard price etc. of the new products of A as the list of the new products manufactured by A is displayed in the middle of the screen. In addition, by pressing etc. the buttons in the respective product sections, it is possible to change the screen to the screen displaying detailed information of the product, or to the screen for purchasing the product. Further, the information as to the other products manufactured by A, and the button etc. for changing the screen to the screen displaying information etc. as to Q & A of the products are displayed in the lower portion of the screen. Further, by clicking on the upper-left icon, it is possible to store, print, or zoom-in on the portal screen. Furthermore, it is possible to change it to the screen such as the list of other menus or television screen other than the portal screen.

In addition, other than the example of Fig. 6, only the manufacturer's name 'A' may be displayed on the portal screen. As a result of this, the user always watches the portal screen at the outset of using the electronic apparatus, thereby increasing the manufacturer's name awareness to user.

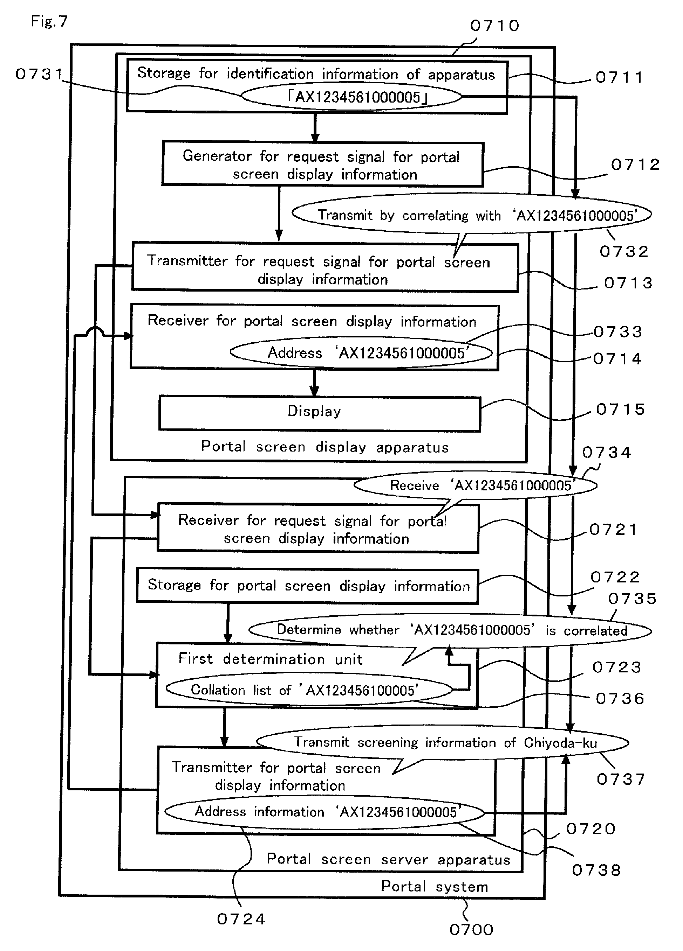

Fig. 7 is a functional block diagram of explaining the function of the identification information of apparatus in the system configuration of the first embodiment according to the concrete example.

Fig. 7 shows the case in which a postal code is included in the identification information of apparatus, and in Fig. 7, the postal code is `100-0005' of Marunouchi, Chiyoda-ku, Tokyo.

In Fig. 7, the identification information of apparatus, including the identification information of manufacturer of A, is preliminarily stored in the 'storage for portal screen display information' (0711) of the 'the portal screen display apparatus' (0710). In Fig. 7, the postal code information is indicated by 1000005', and the identification information of apparatus including the postal code is indicated by 'AX1234561000005' (0731).

As to the identification information of apparatus, when the 'transmitter for request signal for portal screen display information' (0713) of the apparatus (0710) transmits the request signal for portal screen display information, the 'AX1234561000005' is correlated with the signal, and is transmitted (0732), so that the postal code of Marunouchi, Chiyoda-ku, '100-0005' is included therein and transmitted.

The transmitted identification information of apparatus 'AX1234561000005' including the postal code '100-0005' of Marunouchi, Chiyoda-ku is received (0734) by the 'receiver for request signal for portal screen display information' (0721) of the 'portal screen server apparatus' (0720).

It is determined (0735) whether the received identification information of apparatus has been correlated with the request signal for portal screen display information by the 'first determination unit' (0723) of the apparatus (0720). At that point, the determination is carried out, in the example of Fig. 7, based on the collation list of identification information of apparatus (0736), which is preliminarily stored in the unit (0723), by collating, for example, whether the `AX1234561000005' exists in the list. As a result of this determination, the apparatus (0720) can know whether the received request signal for portal screen display information has been transmitted from the portal screen display apparatus, which has been placed in Marunouchi, Chiyoda-ku. Consequently, the portal screen server apparatus can display the appropriate portal screen, which meets the user's needs in the area.

As a result of the determination, it is determined that the identification information of apparatus including the postal code information is correlated with the request signal for portal screen display information, the 'transmitter for portal screen display information' (0724) of the apparatus (0720) transmits (0737) the portal screen display information corresponding to the identification information of apparatus including the postal code information (in Fig. 7, the screening information of Chiyoda-ku) to the 'receiver for portal screen display information' (0714) of the 'portal screen display apparatus' (0710).

The portal screen display information corresponding to the identification information of apparatus including the postal code is, for example, in cases where the portal screen display apparatus is placed in Marunouchi, Chiyoda-ku, the portal screen including the screening information in Chiyoda-ku is displayed on the portable screen. Alternatively, the other information as to Chiyoda-ku such as weather information or traffic information may be displayed. Alternatively, a search screen for searching for the information of Chiyoda-ku may be displayed. Alternatively, a button for connecting to the agency, such as an emergency hospital etc., may be displayed.

At that point, the address (0733) of the unit (0714), which is a transmission destination, is, in the example of Fig. 7, based on the address information (0738) correlated with the preliminarily stored identification information of apparatus. In Fig. 7, the identification information of apparatus 'AX1234561000005' is used for the address (0733) without change.

The transmitted portal screen display information is received at the address (0733) of the 'receiver for portal screen display information' (0714), and the information described in the above example, is displayed by the 'display' (0715) of the 'portal screen display apparatus' (0710).

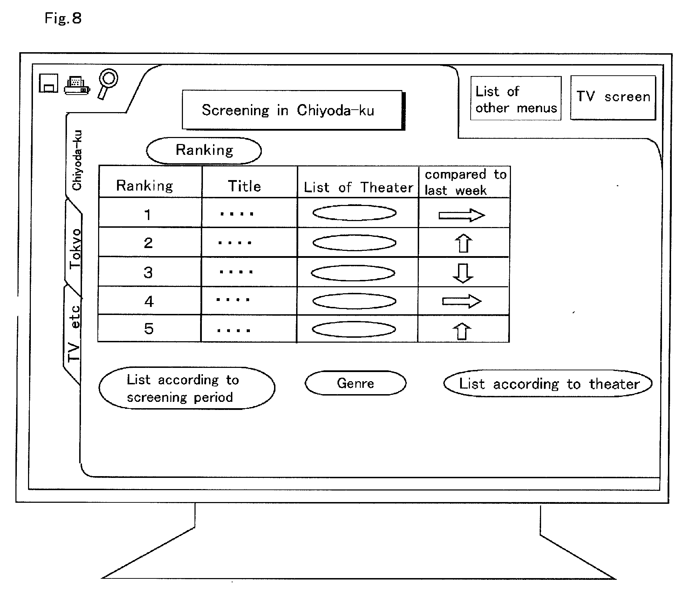

Fig. 8 is a schematic diagram showing that the portal screen is displayed on the portal screen display apparatus according to the concrete example.

In Fig. 8, the portal screen including 'Screening information in Chiyoda-ku' is displayed. Therefore, the information as to the top titles, in order of popularity, and change in ranking etc. of the films showing in Chiyoda-ku is displayed in the middle of the screen. In addition, by pressing etc. the buttons in the respective film sections, it is possible to change the screen to the screen displaying the list of theatres showing the film. Further, the button etc. for changing the screen to the screen displaying information as to the list according to screening period, and the list according to genre etc. are displayed in the lower portion of the screen. Further, by clicking on the upper-left icon, it is possible to store, print, or zoom-in on the portal screen. Furthermore, it is possible to change it to the screen such as the list of other menus or television screen other than the portal screen.

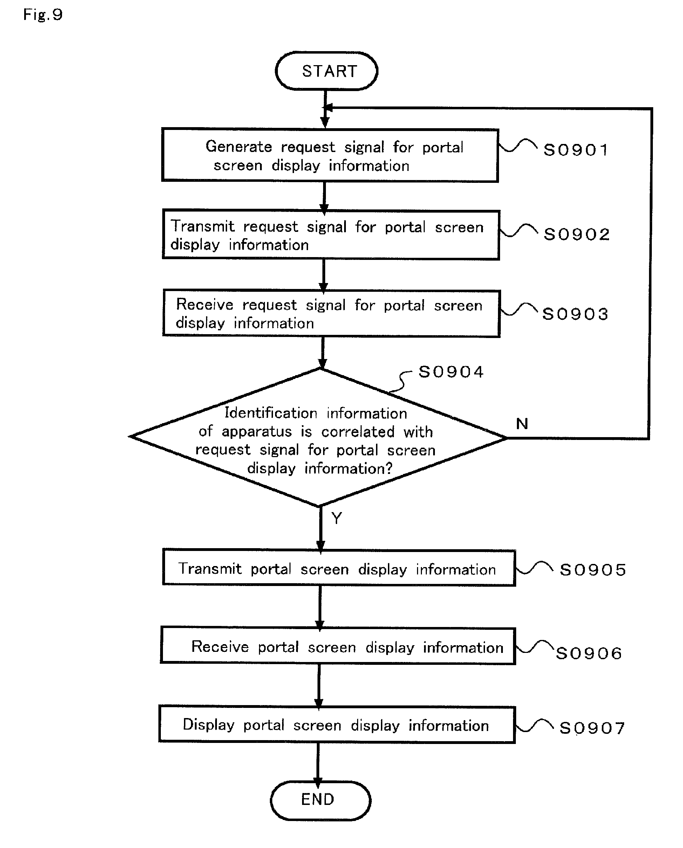

Fig. 9 is a flow chart of the first embodiment. The processing flow in the first embodiment includes the following steps.

At the outset, in the generation step for request signal for portal screen display information (S0901), the system of the first embodiment generates the request signal for portal screen display information, which is a signal for requesting the portal screen display information.

Subsequently, in the transmission step for request signal for portal screen display information (S0902), the system of the first embodiment transmits said request signal for portal screen display information, and said identification information of apparatus correlated with said request signal for portal screen display information.

Subsequently, in the reception step for request signal for portal screen display information (S0903), the system of the first embodiment receives the request signal for portal screen display information.

Subsequently, in cases where, in the determination step (S0904), which determines whether said identification information of apparatus is correlated with the request signal for portal screen display information received by the system of the first embodiment, it is determined that said identification information of apparatus is correlated with the request signal, in the transmission step for portal screen display information (S0905), the system of the first embodiment acquires and transmits said portal screen display information corresponding to the identification information of apparatus.

Subsequently, in the reception step for portal screen display information (S0906), the portal screen display information is received.

Further, in the display step (S0907), the system of the first embodiment displays the portal screen based on the portal screen display information received by said reception step for portal screen display information (S0906).

According to the portal system of the first embodiment, it becomes possible to prevent masquerading caused by leaking of user's identification information to a third party, and to display the portal screen optimized for user etc.

### (Second embodiment)

In the system of the second embodiment according to the first embodiment, said identification information of apparatus of said portal screen display apparatus includes identification information of service provider of broadcasting etc., which is information identifying a service provider of broadcasting etc.

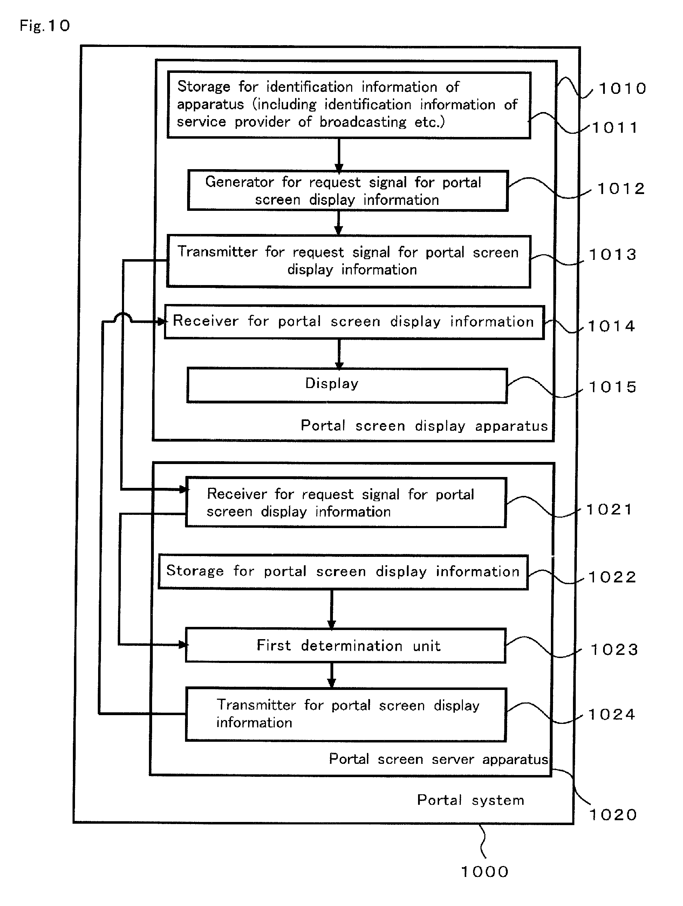

Fig. 10 is a functional block diagram of explaining the second embodiment.

The 'portal system' (1000) of the second embodiment comprises the 'portal screen display apparatus' (1010), and the 'portal screen server apparatus' (1020).

The 'portal screen display apparatus' (1010) comprises the 'storage for identification information of apparatus' (1011), the 'generator for request signal for portal screen display information' (1012), the 'transmitter for request signal for portal screen display information' (1013), the 'receiver for portal screen display information' (1014), and the 'display' (1015). In said identification information of apparatus of said 'portal screen display apparatus' (1010), the identification information of service provider of broadcasting etc., which is information identifying a service provider of broadcasting etc. is included.

The 'service provider of broadcasting etc.' may include both wireless broadcasting service provider and cable broadcasting service provider. Further, it is not necessary for the service provider of broadcasting etc. to be recognized on a company basis, and may be recognized as a separate broadcasting service provider with respect to each local area network of the one company.

The 'identification information of service provider of broadcasting etc.', which is information identifying a service provider of broadcasting etc. may be the name of service provider of broadcasting etc. itself, or a call sign of service provider of broadcasting etc. Alternatively, other than those examples, an original ID assigned for identifying the apparatus may be used. In this case, setting of the identification information of service provider of broadcasting etc. is carried out, for example, by carrying out a predetermined input operation by a user upon initial power-on operation.

Subsequently, the 'portal screen server apparatus' (1020) comprises the 'receiver for request signal for portal screen display information' (1021), the 'storage for portal screen display information' (1022), the 'first determination unit' (1023), and the 'transmitter for portal screen display information' (1024).

Note that the other configurations are the same as those of the first embodiment, so that the description will be omitted.

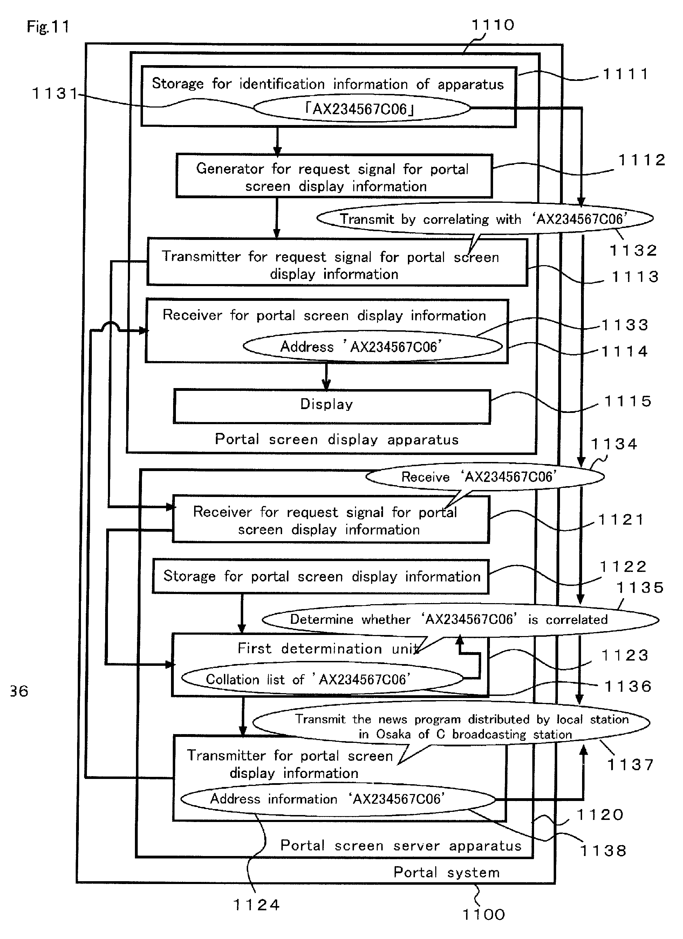

Fig. 11 is a functional block diagram concretely explaining the function of the identification information of apparatus in the system configuration of the second embodiment. In Fig. 11, the service provider of broadcasting etc. is a local station in Osaka of C broadcasting station, the CATV station, to which the user of the portal screen display apparatus subscribed.

In Fig. 11, the identification information of apparatus including the identification information of service provider of broadcasting etc. of the local station in Osaka of C broadcasting station is preliminarily stored in the 'storage for portal screen display information' (1111) of the 'the portal screen display apparatus' (1110). In Fig. 11, the identification information of service provider of broadcasting etc. is indicated by 'C06', and the identification information of apparatus including the identification information of service provider of broadcasting etc. is indicated by 'AX234567C06' (1131).

As to the identification information of apparatus, when the 'transmitter for request signal for portal screen display information' (1113) of the apparatus (1110) transmits the request signal for portal screen display information, the `AX234567C06' is correlated with the signal, and is transmitted (1132), so that the identification information of service provider of broadcasting etc. 'C06' of the local station in Osaka of C broadcasting station is included therein and transmitted.

The transmitted identification information of apparatus 'AX234567C06' including the identification information of service provider of broadcasting etc. 'C06' of the local station in Osaka of C broadcasting station is received (1134) by the 'receiver for request signal for portal screen display information' (1121) of the 'portal screen server apparatus' (1120).

It is determined (1135) whether the received identification information of apparatus has been correlated with the request signal for portal screen display information by the 'first determination unit' (1123) of the apparatus (1120). At that point, the determination is carried out, in the example of Fig. 11, based on the collation list of identification information of apparatus (1136), which is preliminarily stored in the unit (1123), by collating, for example, whether the 'AX234567C06' exists in the list. As a result of this determination, the apparatus (1120) can know whether the received request signal for portal screen display information has been transmitted from the portal screen display apparatus, of which user subscribes to the local station in Osaka of C broadcasting station. Consequently, the portal screen server apparatus can display the appropriate portal screen for the user subscribing to the local station in Osaka of C broadcasting station.

As a result of the determination, it is determined that the identification information of apparatus including the identification information of service provider of broadcasting etc. is correlated with the request signal for portal screen display information, the 'transmitter for portal screen display information' (1124) of the apparatus (1120) transmits (1137) the portal screen display information corresponding to the identification information of apparatus including the identification information of service provider of broadcasting etc. (in Fig. 11, the news program distributed by the local station in Osaka of C broadcasting station) to the 'receiver for portal screen display information' (1114) of the 'portal screen display apparatus' (1110).

The portal screen display information corresponding to the identification information of apparatus including the identification information of service provider of broadcasting etc. is, for example, in cases where the user of the portal screen display apparatus subscribes to the local station in Osaka of C broadcasting station, the portal screen including the identification information of service provider of broadcasting etc. is displayed on the portable screen. Further, by the configuration, in which the identification information of service provider of broadcasting etc. is included in identification information of apparatus, it is possible to discriminate users, who watch the program using the portal screen display apparatus of the second embodiment, from other users, so that it becomes possible to display the information, which is specifically distributed to users of the portal screen display apparatus by the local station in Osaka of C broadcasting station, on the portal screen. For example, the information of the program, which can be watched using the specific function of the portal screen display apparatus, may be displayed, or the information of the program provided by A, which is the subject of the free service, may be displayed, if the portal screen display apparatus is manufactured by A.

At that point, the address (1133) of the unit (1114), which is a transmission destination, is, in the example of Fig. 11, based on the address information (1138) correlated with the preliminarily stored identification information of apparatus. In Fig. 11, the identification information of apparatus 'AX234567C06' is used for the address (1133) without change.

The transmitted portal screen display information is received at the address (1133) of the 'receiver for portal screen display information' (1114), and the information described in the above example, is displayed by the 'display' (1115) of the 'portal screen display apparatus' (1110).

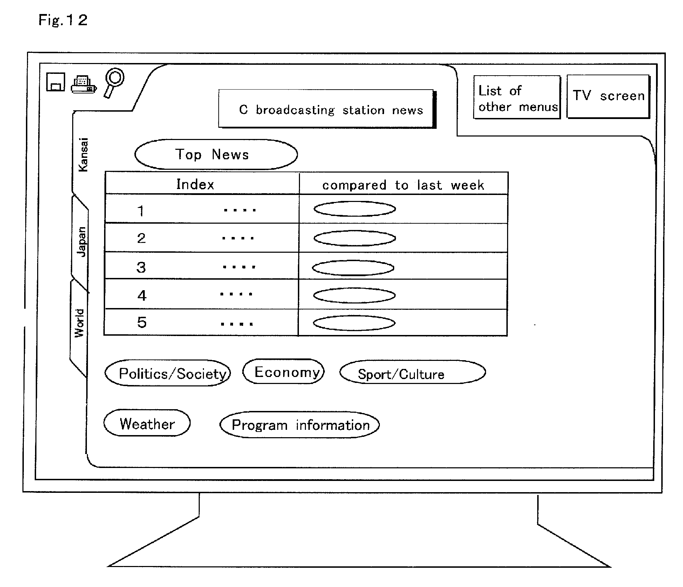

Fig. 12 is a diagram showing that the portal screen is displayed on the portal screen display apparatus according to the concrete example.

In Fig. 12, the portal screen, including 'News program of C broadcasting station', is displayed. Therefore, the news titles of top news in Kansai area, which are distributed by the local station in Osaka of C broadcasting station, is displayed in the middle of the screen. In addition, by pressing etc. the buttons in the respective news sections, it is possible to change the screen to the screen displaying the detailed information of the news. Further, the buttons etc., which are for changing the screen to the screen displaying information etc. as to the news according to the categories such as politics, society, economy etc., are displayed in the lower portion of the screen. Further, in the same screen, for example, it is possible to change the sheet 'Kansai' to the sheet displaying news of another area such as 'Japan' or 'World'. Further, by clicking on the upper-left icon, it is possible to store, print, or zoom-in on the portal screen. Furthermore, it is possible to change it to the screen such as the list of other menus or television screen other than the portal screen.

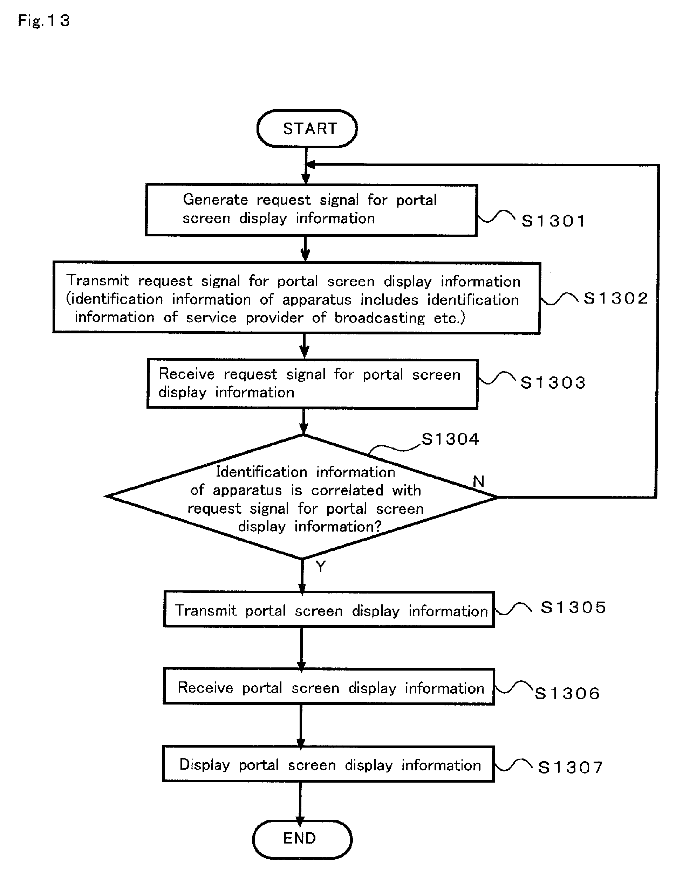

Fig. 13 is a flow chart of the second embodiment. The processing flow in the second embodiment includes the following steps.

In this transmission step for request signal for portal screen display information (S1302), the identification information of service provider of broadcasting etc., which is information identifying a service provider of broadcasting etc., is included in the identification information of apparatus, which is transmitted by the system of the second embodiment.

Note that the other processing flows are the same as those of the first embodiment, so that the description will be omitted.

According to the system of the second embodiment, it becomes possible to display the screen with respect to each service provider of broadcasting etc. As a result of this, for example, it becomes possible to strongly impress the service provider's name of broadcasting etc. on user.

### (Third embodiment)

In the system of the third embodiment according to the first or second embodiment, said storage for portal screen display information comprises the storage means for portal screen display information according to manufacturer, which stores said portal screen display information correlated with the identification information of manufacturer.

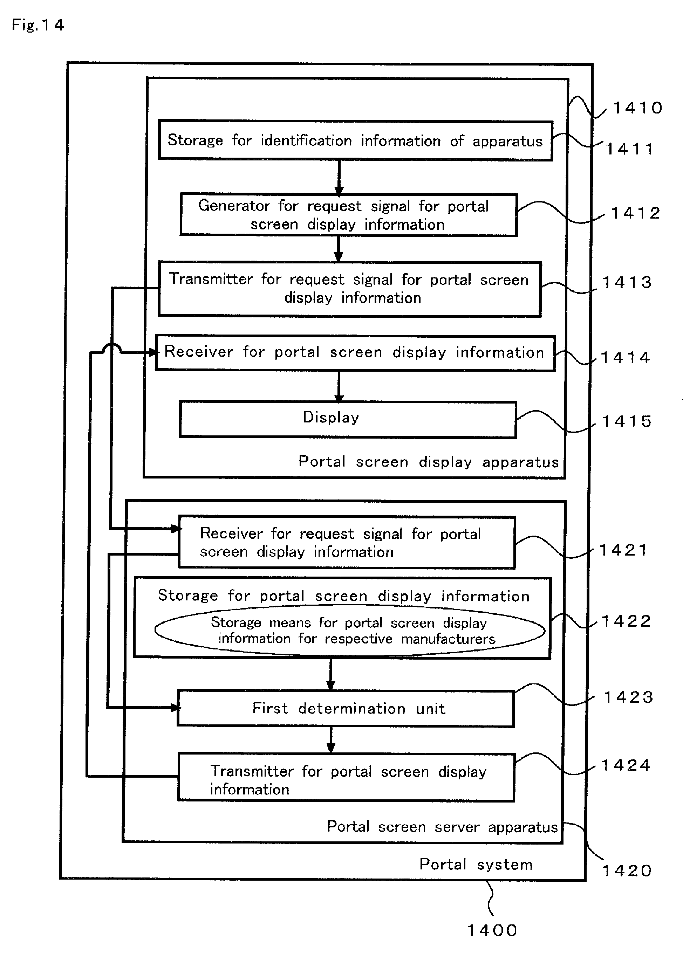

Fig. 14 is a functional block diagram explaining the third embodiment.

The 'portal system' (1400) of the third embodiment comprises the 'portal screen display apparatus' (1410), and the 'portal screen server apparatus' (1420).

The 'portal screen display apparatus' (1410) comprises the 'storage for identification information of apparatus' (1411), the 'generator for request signal for portal screen display information' (1412), the 'transmitter for request signal for portal screen display information' (1413), the 'receiver for portal screen display information' (1414), and the 'display' (1415).

Subsequently, the 'portal screen server apparatus' (1420) comprises the 'receiver for request signal for portal screen display information' (1421), the 'storage for portal screen display information' (1422), the 'first determination unit' (1423), and the 'transmitter for portal screen display information' (1424).

Said 'storage for portal screen display information' (1422) comprises the 'storage means for portal screen display information according to manufacturer' (1425), which stores said portal screen display information correlated with the identification information of manufacturer.

In addition, although not indicated in Fig. 14, said identification information of apparatus of said 'portal screen display apparatus' (1410) may include the identification information of service provider of broadcasting etc., which is information identifying a service provider of broadcasting etc.

Note that the other configurations are the same as those of the first embodiment, so that the description will be omitted.

According to the system of the third embodiment, even if multiple manufacturers exist, it becomes possible to display the portal screen of the specific manufacturer as the appropriate screen, which meets the needs of user.

### (Fourth embodiment)

In the system of the fourth embodiment according to the first or second embodiment, said storage for portal screen display information comprises, the storage means for portal screen display information according to broadcasting service provider etc., which stores said portal screen display information correlated with the identification information of broadcasting service provider etc.

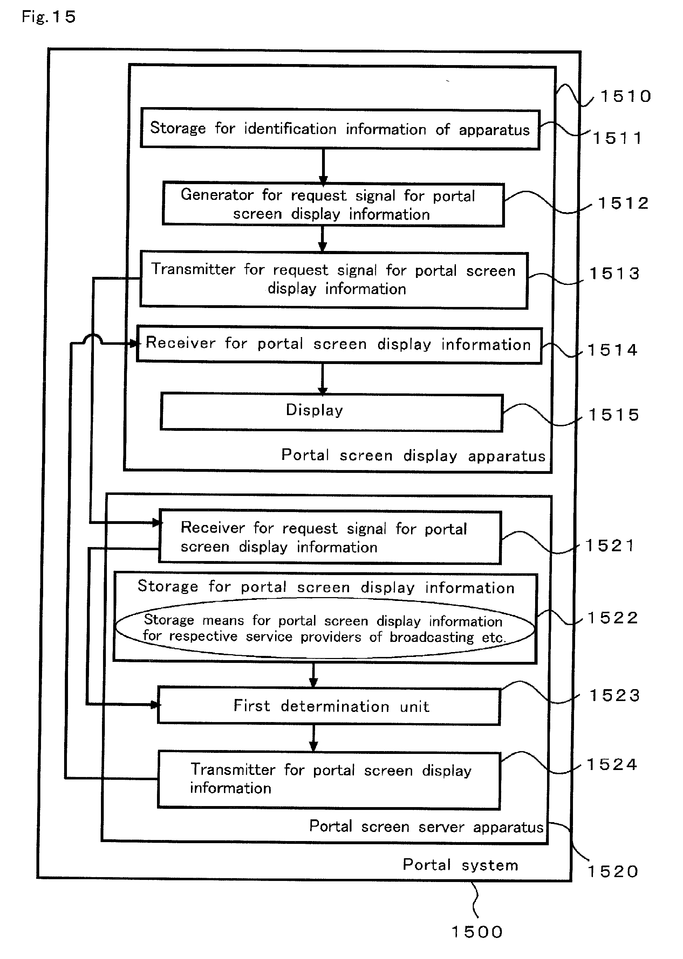

Fig. 15 is a functional block diagram of explaining the fourth embodiment.

The 'portal system' (1500) of the fourth embodiment comprises the 'portal screen display apparatus' (1510), and the 'portal screen server apparatus' (1520).

The 'portal screen display apparatus' (1510) comprises the 'storage for identification information of apparatus' (1511), the 'generator for request signal for portal screen display information' (1512), the 'transmitter for request signal for portal screen display information' (1513), the 'receiver for portal screen display information' (1514), and the 'display' (1515).

Subsequently, the 'portal screen server apparatus' (1520) comprises the 'receiver for request signal for portal screen display information' (1521), the 'storage for portal screen display information' (1522), the 'first determination unit' (1523), and the 'transmitter for portal screen display information' (1524).

Said 'storage for portal screen display information' (1522) comprises the 'storage means for portal screen display information according to broadcasting service provider etc.' (25), which stores said portal screen display information correlated with the identification information of broadcasting service provider etc.

The 'broadcasting service provider etc.' has the same meaning as the 'service provider of broadcasting etc.', and the same is applied to other embodiments.

In addition, although not indicated in Fig. 15, said identification information of apparatus of said 'portal screen display apparatus' may include the identification information of service provider of broadcasting etc., which is information identifying a service provider of broadcasting etc.

Note that the other configurations are the same as those of the first embodiment, so that the description will be omitted.

According to the system of the fourth embodiment, even if multiple service providers of broadcasting etc. exist, it becomes possible to display the portal screen of the specific service provider of broadcasting etc. as the appropriate screen, which meets the needs of user.

### (Fifth embodiment)

In the system of the fifth embodiment according to any one of the first to fourth embodiments, said portal screen server apparatus comprises, the transmitter for predetermined request information, which transmits predetermined request information requesting predetermined information to said portal screen display apparatus based on the request signal for portal screen display information received by said receiver for request signal for screen display information, or on the identification information of apparatus correlated with the request signal and received, and said transmitter for portal screen display information acquires the portal screen display information from said storage for portal screen display information, and transmits the portal screen display information to said portal screen display apparatus further based on response information replied to said predetermined request information from said portal screen display apparatus, and said portal screen display apparatus comprises the receiver for predetermined request signal, which receives said predetermined request signal, and the replier for response, which replies the response information in accordance with the predetermined request information received by said receiver for predetermined request information.

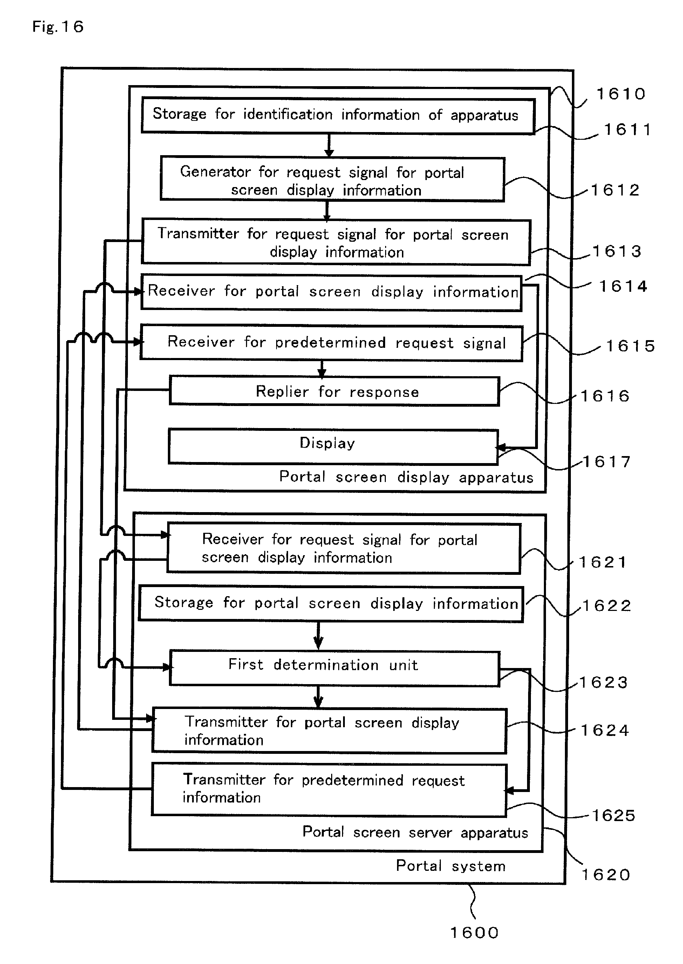

Fig. 16 is a functional block diagram explaining the fifth embodiment.

The 'portal system' (1600) of the fifth embodiment comprises the 'portal screen display apparatus' (1610), and the 'portal screen server apparatus' (1620).

The 'portal screen display apparatus' (1610) comprises the 'storage for identification information of apparatus' (1611), the 'generator for request signal for portal screen display information' (1612), the 'transmitter for request signal for portal screen display information' (1613), the 'receiver for portal screen display information' (1614), the 'receiver for predetermined request signal' (1615), the 'replier for response' (1616), and the 'display' (1617).

Subsequently, the 'portal screen server apparatus' (1620) comprises the 'receiver for request signal for portal screen display information' (1621), the 'storage for portal screen display information' (1622), the 'first determination unit' (1623), the 'transmitter for portal screen display information' (1624), and the 'transmitter for predetermined request information' (1625).

The 'transmitter for predetermined request information' (1625) of the 'portal screen server apparatus' (1620) transmits predetermined request information requesting predetermined information to said portal screen display apparatus based on the request signal for screen display information received by said receiver for request signal for screen display information, or on the identification information of apparatus correlated with the request signal and received.

The 'predetermined request information' is information for requesting additional information, in cases where just the information included in the request signal for portal screen display information is not enough to determine the content of the portal screen display information transmitted to the portal screen display apparatus, or in cases where although the minimum determination for fulfilling the request is possible, more detailed information makes it possible to reply with more effective screen display information. For example, in cases where the identification information of service provider of broadcasting etc. is included in the identification information of apparatus stored in the portal screen display apparatus, and just the information, which indicates that the service provider of broadcasting etc. is D broadcasting station, is added, the predetermined request information, which requests information as to whether the D broadcasting station is a nationwide station or is a local station in a specific area, is transmitted.

The 'receiver for predetermined request signal' (1615) of the 'portal screen display apparatus' (1610) receives said predetermined request signal.

The 'replier for response' (1616) of the 'portal screen display apparatus' (1610) replies to the response information in accordance with the predetermined request information received by said receiver for predetermined request information. The 'response information' is, for example, the information indicating that the D broadcasting station is a nationwide station.

The 'transmitter for portal screen display information' (1624) of the 'portal screen server apparatus' (1620) acquires the portal screen display information from said 'storage for portal screen display information' (1622), and transmits the portal screen display information to said 'portal screen display apparatus' (1610) further based on response information replied to said predetermined request information from said 'portal screen display apparatus' (1610)

For example, in cases where the response information indicates that 'the D broadcasting station is a nationwide station', the 'transmitter for portal screen display information' (1624) acquires, for example, the 'request information for a screen of news program of D broadcasting station' and the postal code of the address, in which the portal screen display apparatus is placed, (e.g. the postal code of Marunouchi, Chiyoda-ku), as the portal screen display information, and transmits the portal screen display information, which is for displaying the portal screen including the screen of news program provided to Tokyo area by the local station in Tokyo of D broadcasting station, further based on the response information, which indicates that 'the D broadcasting station is a nationwide station'.

In addition, although not indicated in Fig. 16, said identification information of apparatus of said 'portal screen display apparatus' (1622) may include the identification information of service provider of broadcasting etc., which is information identifying a service provider of broadcasting etc.

In addition, although not indicated in Fig. 16, said identification information of apparatus of said 'storage for portal screen display information' (1622) may include the 'storage means for portal screen display information according to manufacturer, which stores said portal screen display information correlated with the identification information of manufacturer.

In addition, although not indicated in Fig. 16, said identification information of apparatus of said 'storage for portal screen display information' may include the 'storage means for portal screen display information according to service provider of broadcasting etc., which stores said portal screen display information correlated with the identification information of service provider of broadcasting etc..

Note that the other configurations are the same as those of the first embodiment, so that the description will be omitted.

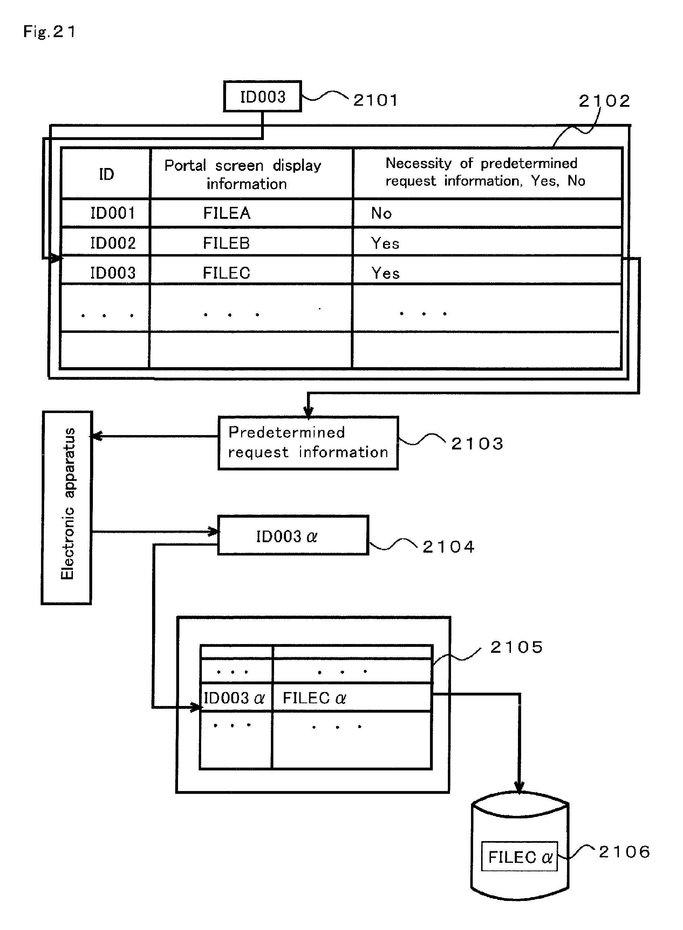

Fig. 21 is a diagram of concrete example of the configuration of the portal system of the fifth embodiment, in which the transmitter for the predetermined request information transmits predetermined request information, the transmitter for screen display information acquires the portal screen display information, and transmits the portal screen display information to said portal screen display apparatus further based on response information replied to said predetermined request information from said portal screen display apparatus, and said portal screen display apparatus receives said predetermined request signal, and replies the response information in accordance with the predetermined request information.

In the example of the fifth embodiment, the identification information of apparatus is the information 'ID003' (2101), and the identification information of apparatus is correlated with the request signal for portal screen display information, and transmitted from the transmitter for request signal for portal screen display information of the apparatus to the receiver for portal screen display information of the portal screen server apparatus, and is received by the receiver. The portal screen server apparatus stores the table (2102), in which the identification information of apparatus and the portal screen display information are preliminarily correlated, and the necessity of the predetermined request information is also correlated. If it is determined by the first determination unit of the apparatus based on the table that the predetermined request information is necessary, the 'predetermined request information as to ID003' (2103) as the predetermined request information is transmitted from the transmitter for predetermined request information of the apparatus to the receiver for predetermined request information of the portal screen display apparatus, and is received by the receiver. According to this, the portal screen display apparatus replies 'ID003α' (2104) as the response information to the portal screen server apparatus. The portal screen server apparatus stores the table (2105), in which the response request information and the portal screen display information are preliminarily correlated, and transmits the corresponding portal screen display information 'FILECα' to the portal screen display apparatus based on the table.

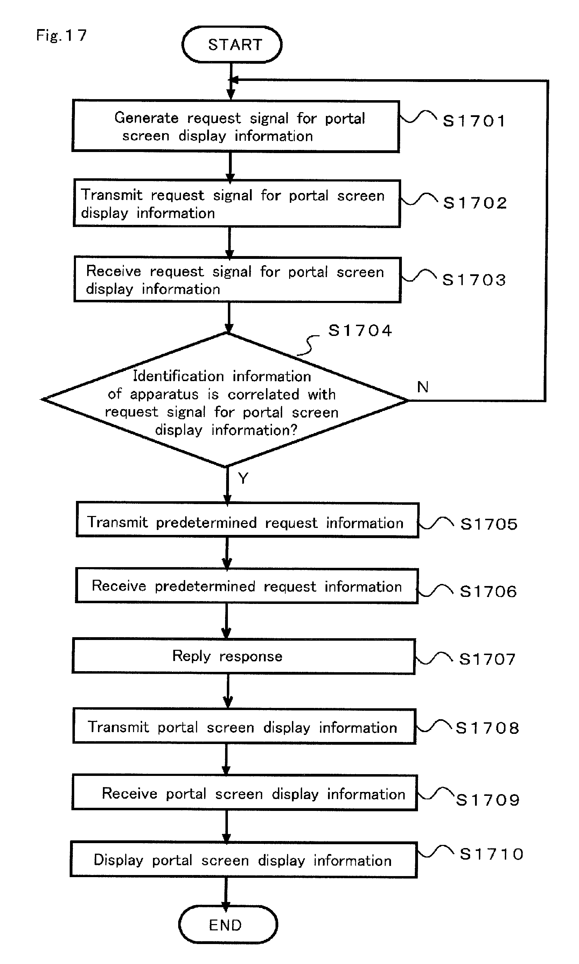

Fig. 17 is a flow chart of the fifth embodiment. The processing flow in the fifth embodiment includes the following steps.

In the determination step (S1704), which determines whether said identification information of apparatus is correlated with the request signal for portal screen display information received by the system of the fifth embodiment, if it is determined that they are correlated, in the transmission step for predetermined request information (S1705), the system of the fifth embodiment transmits predetermined request information based on the request signal for screen display information, or on the identification information of apparatus correlated with the request signal and received.

Subsequently, in the reception step for predetermined request information (S1706), the system of the fifth embodiment receives said the predetermined request information transmitted by said step (S1705).

Subsequently, in the reply step for response (S1707), the system of the fifth embodiment replies the response information in accordance with the predetermined request information received by said step (S 1706).

Subsequently, in the transmission step for portal screen display information (S1708), the system of the fifth embodiment acquires and transmits the portal screen display information further based on response information replied by said step (S1707).

Note that the other configurations arc the same as those of the first embodiment, so that the description will be omitted.

According to the system of the fifth embodiment, it becomes possible to display the portal screen, to which the information other than the information included in the request signal for portal screen display information is added, as the more appropriate screen, which meets the needs of user.

### (Sixth embodiment)

In the system of the sixth embodiment according to the first embodiment, said portal screen display apparatus comprises the storage means for portal screen display information according to broadcasting service provider etc., which stores said portal screen display information correlated with the identification information of broadcasting service provider etc., the second determination unit, which determines whether said identification information of apparatus includes said identification information of broadcasting service provider etc., and the transmitter for message, which transmits a message for promotion of subscribing to a service of broadcasting service provider etc. to said portal screen display apparatus, if the determination result by said second determination unit indicates that said identification information of apparatus does not include said identification information of broadcasting service provider etc.

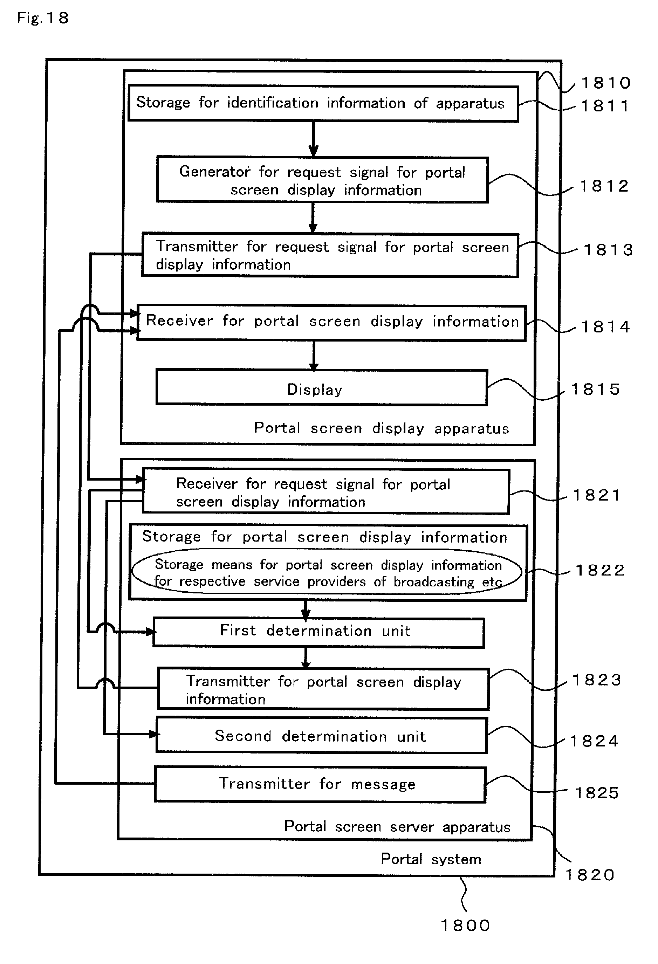

Fig. 18 is a functional block diagram explaining the sixth embodiment.

The 'portal system' (1800) of the sixth embodiment comprises the 'portal screen display apparatus' (1810), and the 'portal screen server apparatus' (1820).

The "portal screen display apparatus' (1810) comprises the 'storage for identification information of apparatus' (1811), the 'generator for request signal for portal screen display information' (1812), the 'transmitter for request signal for portal screen display information' (1813), the 'receiver for portal screen display information' (1814), and the 'display' (1815).

Subsequently, the 'portal screen server apparatus' (1820) comprises the 'receiver for request signal for portal screen display information' (1821), the 'storage for portal screen display information' (1822), the 'first determination unit' (1823), the 'transmitter for portal screen display information' (1824), and the 'second determination unit' (1825), and the 'transmitter for message' (1826).

The 'storage for portal screen display information' (1822) of the 'portal screen server apparatus' (1820) comprises the storage means for portal screen display information according to broadcasting service provider etc. (1827), which stores said portal screen display information correlated with the identification information of broadcasting service provider etc.,

The 'second determination unit' (1825) of the 'portal screen server apparatus' (1820) determines whether said identification information of apparatus includes said identification information of broadcasting service provider etc., and

The 'transmitter for message' (1826) of the 'portal screen server apparatus' (1820) transmits a message for promotion of subscribing to a service of broadcasting service provider etc. to said 'portal screen display apparatus' (1810).

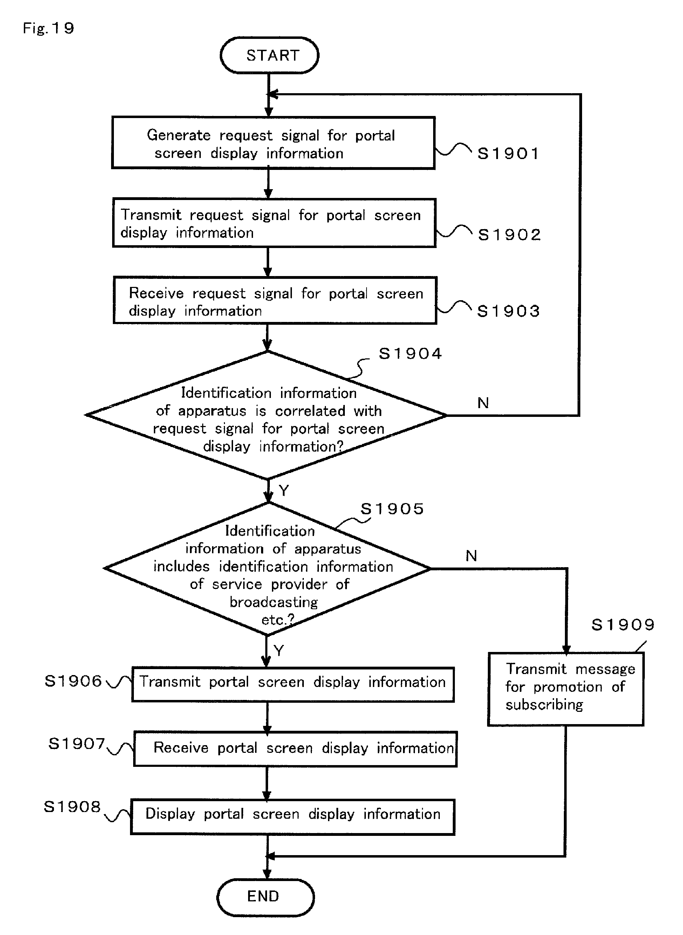

Fig. 19 is a flow chart of the sixth embodiment. The processing flow in the sixth embodiment includes the following steps.

In cases where, in the determination step (S1904), which determines whether said identification information of broadcasting service provider etc. is included in said identification information of apparatus, it is determined that said identification information of broadcasting service provider etc. is not included in said identification information of apparatus, in the transmission step for message (S1909), a message for promotion of subscribing to a service of broadcasting service provider etc. is transmitted,

Note that the other configurations are the same as those of the first embodiment, so that the description will be omitted.

According to the system of the sixth embodiment, it becomes possible to promote a subscription to a user, who does not subscribe to a service of service provider of broadcasting etc., especially CATV.

### (Seventh embodiment)

In the system of the seventh embodiment according to any one of the first to sixth embodiments, said display of said portal screen display apparatus acquires the information for displaying the portal screen from itself based on the portal screen display information corresponding to said identification information of apparatus, and displays the portal screen based on the acquired information.

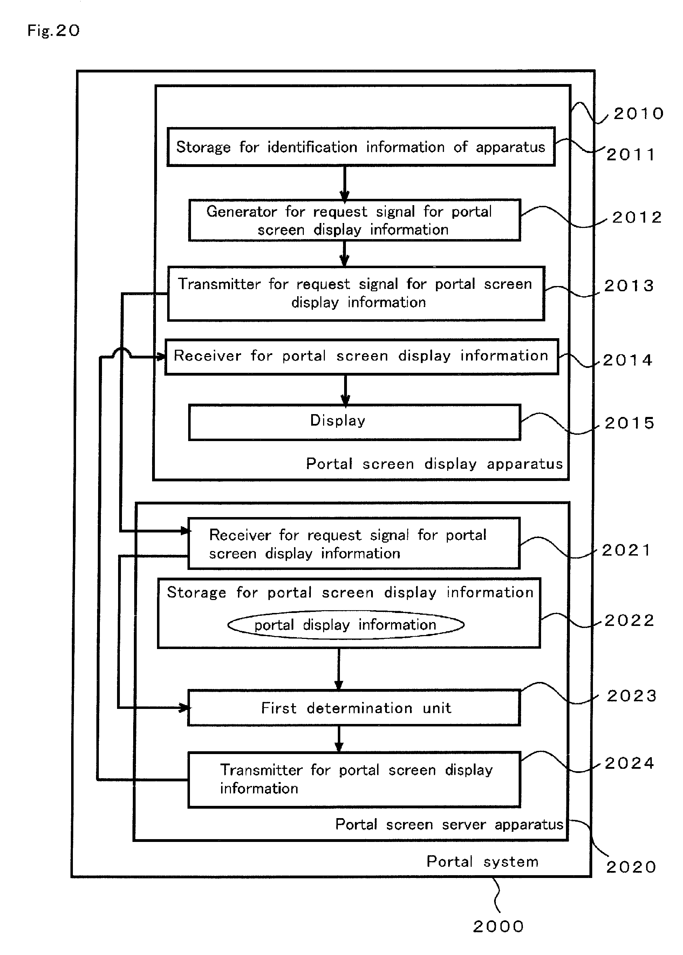

Fig. 20 is a functional block diagram explaining the seventh embodiment.

The 'portal system' (2000) of the seventh embodiment comprises the 'portal screen display apparatus' (2010), and the 'portal screen server apparatus' (2020).

The 'portal screen display apparatus' (2010) comprises the 'storage for identification information of apparatus' (2011), the 'generator for request signal for portal screen display information' (2012), the 'transmitter for request signal for portal screen display information' (2013), the 'receiver for portal screen display information' (2014), and the `display' (2015).

Subsequently, the 'portal screen server apparatus' (2020) comprises the 'receiver for request signal for portal screen display information' (2021), the 'storage for portal screen display information' (2022), the 'first determination unit' (2023), and the 'transmitter for portal screen display information' (2024).

The 'display' (2015) of the 'portal screen display apparatus' (2010) acquires the information for displaying the portal screen from itself based on the portal screen display information corresponding to said identification information of apparatus, and displays the portal screen based on the acquired information.

Therefore, in the seventh embodiment, in cases where just the portion of information is transmitted from the portal screen display server, the information preliminarily stored in the portal screen is added to the transmitted information, so that the information to be displayed on the portal screen is generated as the entire information.

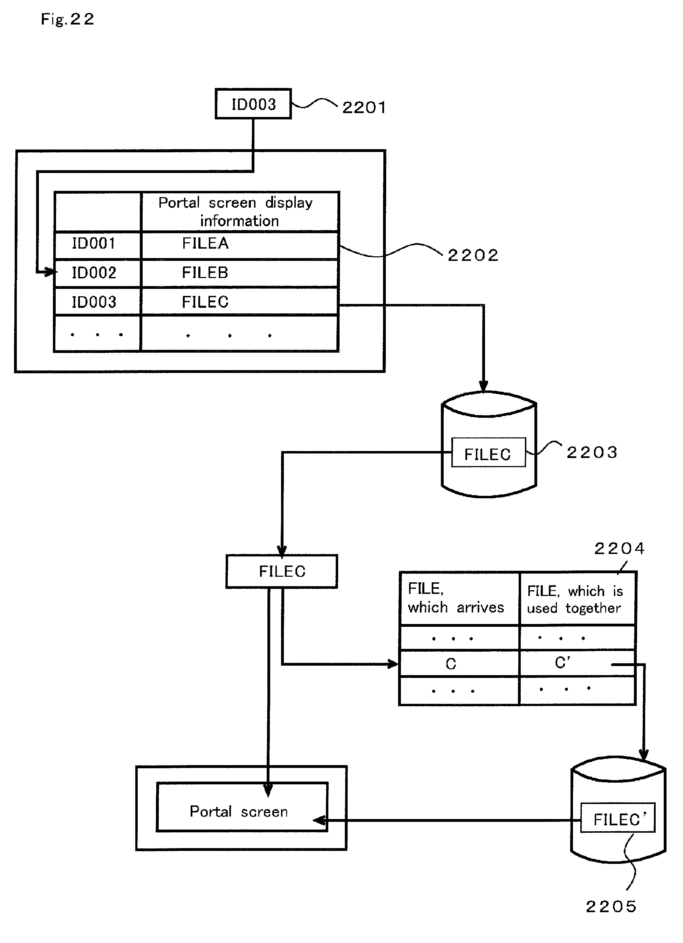

Fig. 22 is a schematic diagram of a concrete example of the configuration, in which the portal system of the seventh embodiment acquires the information for displaying the portal screen from itself based on the portal screen display information corresponding to said identification information of apparatus, and displays the portal screen based on the acquired information.

In the example of the seventh embodiment, the information 'ID003' (2201) as the identification information of apparatus is preliminarily stored in the storage for identification information of apparatus of the portal screen display apparatus, and the identification information of apparatus is correlated with the request signal for portal screen display information, and transmitted from the transmitter for request signal for portal screen display information of the apparatus to the receiver for portal screen display information of the portal screen server apparatus, and is received by the receiver. The portal screen server apparatus stores the table (2202), in which the identification information of apparatus and the portal screen display information are preliminarily correlated. In the first determination unit of the apparatus, it is determined whether the identification information of apparatus received based on the table is correlated with the request signal for portal screen display information, and if it is determined that they are correlated, the 'FILEC' (2203) as the portal screen display information corresponding to the identification information of apparatus is transmitted from the portal screen server apparatus to portal screen display apparatus. Meanwhile, the portal screen display apparatus preliminarily stores the list (2204), in which the portal screen display information and the file used together with this information are correlated, and transmits both files to the display, therefore, based on the list, the transmitted 'FILEC' and the corresponding 'FILEC" (2205) used together with the file, are transmitted. Subsequently, the display displays the portal screen based on the information including both files.

According to the system of the seventh embodiment, it becomes possible to promote a subscription to a user, who does not subscribe to a service of service provider of broadcasting etc., especially CATV.

## Claims

1. A portal system, comprising:
a portal screen display apparatus; and
a portal screen server apparatus, wherein
said portal screen display apparatus comprises,
a storage for identification information of apparatus, which stores identification information of apparatus including identification information of manufacturer, which identifies its own manufacturer, in non-rewritable state,
a generator for request signal for portal screen display information, which generates a request signal for portal screen display information, which is a signal for requesting the portal screen display information to said portal screen server apparatus,
a transmitter for request signal for portal screen display information, which transmits the request signal for portal screen display information, and said identification information of apparatus correlated with said request signal for portal screen display information,
a receiver for portal screen display information, which receives the portal screen display information from said portal screen server apparatus,
a display, which displays a portal screen based on the portal screen display information received by said receiver for portal screen display information, and
said portal screen server apparatus comprises,
a receiver for request signal for portal screen display information, which receives the request signal for portal screen display information,
a storage for portal screen display information, which stores the portal screen display information corresponding to said identification information of apparatus,
a first determination unit, which determines whether said identification information of apparatus is correlated with the request signal for portal screen display information received by said receiver for request signal for portal screen display information, and
a transmitter for portal screen display information, which acquires said portal screen display information corresponding to the identification information of apparatus from said storage for portal screen display information, and transmits it to said portal screen display apparatus, if the determination result by said first determination unit indicates that said identification information of apparatus is correlated with the request signal.

2. The portal system according to Claim 1, wherein
said identification information of apparatus of said portal screen display apparatus includes,
identification information of service provider of broadcasting etc., which is information identifying a service provider of broadcasting etc.

3. The portal system according to Claim 1 or 2, wherein
said storage for portal screen display information comprises,
a storage means for portal screen display information according to manufacturer, which stores said portal screen display information correlated with the identification information of manufacturer.

4. The portal system according to Claim 1 or 2, wherein
said storage for portal screen display information comprises,
a storage means for portal screen display information according to broadcasting service provider etc., which stores said portal screen display information correlated with the identification information of broadcasting service provider etc.

5. The portal system according to any one of Claims 1 to 4, wherein
said portal screen server apparatus comprises,
a transmitter for predetermined request information, which transmits predetermined request information requesting predetermined information to said portal screen display apparatus based on the request signal for screen display information received by said receiver for request signal for screen display information, or on the identification information of apparatus correlated with the request signal and received, and
said transmitter for portal screen display information acquires the portal screen display information from said storage for portal screen display information, and transmits the portal screen display information to said portal screen display apparatus further based on response information replied to said predetermined request information from said portal screen display apparatus, and
said portal screen display apparatus comprises,
a receiver for predetermined request signal, which receives said predetermined request signal, and
a replier for response, which replies the response information in accordance with the predetermined request information received by said receiver for predetermined request information.

6. The portal system according to Claim 1, wherein
said portal screen display apparatus comprises,
a storage means for portal screen display information according to broadcasting service provider etc., which stores said portal screen display information correlated with the identification information of broadcasting service provider etc.,
a second determination unit, which determines whether said identification information of apparatus includes said identification information of broadcasting service provider etc., and
a transmitter for message, which transmits a message for promotion of subscribing to a broadcasting service provider etc. to said portal screen display apparatus, if the determination result by said second determination unit indicates that said identification information of apparatus does not include said identification information of broadcasting service provider etc.

7. The portal screen display apparatus according to any one of Claims 1 to 6.

8. The portal screen server apparatus according to any one of Claims 1 to 6.

9. The portal system according to any one of Claims 1 to 6, wherein
said display of said portal screen display apparatus acquires the information for displaying the portal screen from itself based on the portal screen display information corresponding to said identification information of apparatus, and displays the portal screen based on the acquired information.

10. A method, comprising:
a generation step, which generates a request signal for portal screen display information, which is a signal for requesting the portal screen display information to said portal screen server apparatus;
a transmission step for request signal for portal screen display information, which transmits said request signal for portal screen display information, and said identification information of apparatus correlated with said request signal for portal screen display information;
a reception step for request signal for portal screen display information, in which said portal screen server apparatus receives the request signal for portal screen display information;
a determination step, which determines whether said identification information of apparatus is correlated with the request signal for portal screen display information received by said reception step;
a transmission step for request signal for portal screen display information, which transmits said portal screen display information corresponding to said identification information of apparatus to said portal screen display apparatus, if the determination result by said determination step indicates that said identification information of apparatus is correlated with the request signal;
a reception step for request signal for portal screen display information, which receives the portal screen display information from said portal serene server apparatus; and
a display step, which displays the portal screen based on the portal screen display information received by the reception step for said portal screen display information.

11. The method according to Claim 10, further comprising:
a transmission step for predetermined request information, which transmits predetermined request information requesting predetermined information to said portal screen display apparatus based on the request signal for screen display information received in said reception step for request signal for screen display information by said portal screen server apparatus, or on the identification information of apparatus correlated with the request signal and received by said portal screen server apparatus, wherein
in said transmission step for portal screen display information, the portal screen display information is transmitted to said portal screen display apparatus further based on response information replied to said predetermined request information from said portal screen display apparatus, and further comprising:
a reception step for predetermined request signal, in which said portal screen display apparatus receives said predetermined request signal; and
a reply step for response information, which replies the response information in accordance with the predetermined request information received by said reception step for predetermined request information.

12. The method according to Claim 10, comprising:
a second determination step, in which said portal screen display server apparatus stores said portal screen display information correlated with the identification information of broadcasting service provider etc. in said storage for portal screen display information, and determines whether said identification information of apparatus includes said identification information of broadcasting service provider etc.; and
a transmission step for message, which transmits a message for promotion of subscribing to a service of broadcasting service provider etc. to said portal screen display apparatus, if the determination result by said second determination step indicates that said identification information of apparatus docs not include said identification information of broadcasting service provider etc.
